# EUROPÄISCHE PATENTSCHRIFT

(11) **EP 1 470 086 B1**
(45) Veröffentlichungstag und Bekanntmachung des Hinweises auf die Patenterteilung: **10.08.2005**
(21) Anmeldenummer: 03706221.3
(22) Anmeldetag: 14.01.2003
(51) Int. Cl.: C03B 33/00

(54) **VORRICHTUNG ZUM SCHNEIDEN VON AUS BERWIEGEND MINERALISCHEN STOFFEN BESTEHENDEN EBENEN, FL CHIGEN WERKSTOFFEN&comm a; INSBESONDERE GLAS WIE VERBUNDSICHERHEITSGLAS**
DEVICE FOR CUTTING FLAT, TWO-DIMENSIONAL MATERIALS MADE MOSTLY OF MINERALS, PARTICULARLY GLASS SUCH AS COMPOSITE SAFETY GLASS
DISPOSITIF POUR DECOUPER DES MATERIAUX PLANS PRINCIPALEMENT CONSTITUES DE MATIERES MINERALES, NOTAMMENT DU VERRE TEL QUE DU VERRE DE SECURITE FEUILLETE

(30) Priorität: 15.01.2002 DE 10201253
(43) Veröffentlichungstag der Anmeldung: 27.10.2004
(73) Patentinhaber: Reichel, Frank, 12059 Berlin (DE)
(72) Erfinder: Reichel, Frank, 12059 Berlin (DE)
(74) Vertreter: Scholz, Hartmut, Dipl.-Ing.
(86) Internationale Anmeldenummer: PCT/DE2003/000084
(87) Internationale Veröffentlichungsnummer: WO 2003/059829

(56) Entgegenhaltungen:
- FR-A- 2 709 087
- US-A- 2 529 210
- US-A- 4 385 540
- US-A- 4 739 555
- US-A- 5 488 773
- US-A- 5 600 892

## Beschreibung

### Technisches Gebiet

Die Erfindung betrifft eine universell handhabbare und einsetzbare Vorrichtung zum Schneiden von aus überwiegend mineralischen Stoffen bestehenden ebenen, flächigen Werkstoffen, insbesondere Glas wie Verbundsicherheitsglas. Dabei sind unter diesen Werkstoffen im weiteren Sinne auch solche wie Keramikfliesen oder Kunst-/Natursteinplatten zu verstehen, welche einerseits den Schneidvorgang durch ihre Oberflächenbeschaffenheit nicht nachteilig beeinflussen und andererseits in ihrer Querschnittsstruktur mehrere Schichten mit unterschiedlichen Materialien, wie z.B. Verbundsicherheitsglas umfassen.

### Stand der Technik

Nach den Schriften DE 43 30 473 A1, DE 44 44 184 C2 und DE 42 28 907 A1 ist es vom Verfahrensablauf bekannt, Glasscheiben wie Verbundglasscheiben zunächst beidseitig anzuschneiden, dann zu brechen und anschließend die zwischen den Glasschichten angeordnete Kunststofffolie mittels Plasmastrahl, Messer oder anderer Mittel zu trennen, wobei das beidseitige Anschneiden gleichzeitig erfolgt.

Entsprechend den US 1 495 523 A und US 2 265 955 A ist es weiterhin bekannt, Vorrichtungen zum Schneiden von ebenem Glas einzusetzen, die einen Führungsarm aufweisen, an welchem je ein längerer Arm zueinander parallel mit je einem daran befestigten Schneidwerkzeug angebracht ist, wobei hiermit auch Verbundglasscheiben geschnitten werden können.

Schließlich zeigt der Stand der Technik gemäß der US 4 222 300 A eine Vorrichtung, woraus ein Schneidrad mit einer gegenüber angeordneten Rolle hervorgeht.

Bei einer Zusammenschau dieses Standes der Technik und seiner Übertragung auf das Schneiden von eingangs genannten Werkstoffen wie ebenes Glas, insbesondere Verbundsicherheitsglas, sind mindestens folgende Nachteile entsprechend der Reihenfolge der genannten Veröffentlichungen festzustellen, die eine danach konzipierte Vorrichtung aufweisen würde:
- Es könnten keine schmalen Streifen geschnitten werden, und die flächigen Werkstoffe müssen bei erneutem Schnittansatz auch erneut in der Vorrichtung positioniert werden;
- die Vorrichtung würde mehr stationär anwendbar sein, und z.B. ein Durchtrennen einer Folie bei Verbundsicherheitsglas wäre problematisch;
- die Vorrichtung würde einen stationären Trenntisch erfordern und die zuvor beschriebenen Nachteile aufweisen;
- die Vorrichtung als Handgerät mit federndem Gestell würde nur ein einseitiges Schneiden ermöglichen;
- die mögliche doppeltschneidende Vorrichtung würde keine fixierte Führung am Werkstoff gewährleisten;
- die Vorrichtung ohne fixierte Führung ließe sich als Montagewerkzeug vor Ort nicht einsetzen.

Die Erfindung geht nun von der Problematik aus, daß nach diesem Stand der Technik die industriell angefertigten, relativ großen, zur Verarbeitung angelieferten Werkstoffe wie z.B. Verbundglasscheiben immer von zwei Seiten gleichzeitig geschnitten werden müssen, um sie auf das gewünschte Maß zu bringen. Daraufhin wird die große und schwere z.B. Scheibe vom Arbeitstisch heruntergenommen oder vor Ort von zwei Personen gehalten und umgedreht. Schließlich wird die Teilscheibe, nachdem sie über eine Kante gezogen worden ist, nach unten und oben abgebrochen und die Kunststofffolie dazwischen getrennt.

Dabei treten die oben beschriebenen Nachteile auf. Ein rationelles und qualitätsgerechtes Schneiden besagter Werkstoffe ist nicht möglich.

Das Problem ist auch nicht zu beseitigen, wenn die US 4,739,555 A hinsichtlich ihrer Anwendung näher untersucht wird. Hiernach ist eine Vorrichtung zum Schneiden von Glasscheiben bekannt, die einen Rahmen mit gabelartigen Armen, an deren freiem Ende jeweils ein Schneidwerkzeug befestigt ist, und eine einstellbare Traverse zur Einstellung des Schneidabstandes aufweist. Die erforderliche Vorspannung wird hierbei durch nachteilige Vorspannelemente an jedem der beiden Schneidwerkzeuge erzeugt, und es ist nur eine einzige Führungsrollenanordnung vorgesehen, die eine genaue Führung nicht ermöglicht.

### Darstellung der Erfindung

Der Erfindung liegt die Aufgabe zugrunde, eine Vorrichtung zum Schneiden von ebenen Werkstoffen der eingangs beschriebenen Art zu schaffen, insbesondere Glas wie Verbundsicherheitsglas, die
- sowohl in der Werkstatt stationär als auch in jeder Lage vor Ort, d.h. auch in senkrechter Lage des flächigen Werkstoffes, einsetzbar und von einer Person leicht handhabbar ist,
- das Abschneiden der Teile von z.B. Glasscheiben bei hoher Qualität, wie Maßgenauigkeit und Vermeidung von Bruch, erleichtert und rationalisiert sowie den Arbeitsablauf unfallsicher gestaltet und
- in konstruktiver Hinsicht einen Rahmen mit Armen und Führungselementen sowie beidseitig und gleichzeitig wirkenden Schneidelementen aufweist, wobei die neuen Konstruktionsmerkmale die im Stand der Technik beschriebenen Nachteile beseitigen sollen.

Erfindungsgemäß wird diese Aufgabe mit den Merkmalen des Anspruchs 1 gelöst. Bevorzugte Ausführungen der Erfindung sind in den abhängigen Ansprüchen 2 bis 15 erwähnt.

Die Erfindung wird nachstehend an einem Ausführungsbeispiel beschrieben.

### Kurze Beschreibung der Zeichnungen

In den Zeichnungen zeigen
- Fig. 1: eine vereinfachte perspektivische Darstellung der Vorrichtung 1 in einer Arbeitslage,
- Fig. 2: den Rahmen 2 der Vorrichtung 1 mit dem Schneidkopf 3 und der Traverse 4 in der Draufsicht,
- Fig. 3: den Rahmen 2 gemäß Fig. 2 als Längsschnitt in der Seitenansicht,
- Fig. 4: die Traverse 4 mit dem Führungskopf 4.1 in der Vorderansicht,
- Fig. 5: die Traverse 4 gemäß Fig. 4 in der Draufsicht und
- Fig. 6: die Traverse 4 gemäß Fig. 4 in der Seitenansicht.

### Bester Weg zur Ausführung der Erfindung

Ein Werkstoff 5 kann im allgemeinen aus überwiegend mineralischen Stoffen bestehen, der eben und flächig ist. Insbesondere ist der Werkstoff 5 Glas, vorrangig eine Verbundglasscheibe, an welchem das Ausführungsbeispiel am vorteilhaftesten demonstrierbar ist.

Derartige Scheiben aus Verbundsicherheitsglas 5 werden zu einem passenden Maß nicht nur in der Werkstatt, sondern häufig vor Ort geschnitten.

Das zu einer Bezugskante dieses Werkstoffes 5 einzustellende Maß, die Führung einer Vorrichtung 1 mit den gattungsgemäßen Merkmalen an der Bezugskante des Werkstoffes 5 wie Verbundsicherheitsglas 5 während des Schneidvorganges und die universelle Handhabung gleich in welcher örtlichen und/oder geometrischen Lage, z.B. der Scheibe aus Verbundsicherheitsglas 5 - so auch in senkrechten oder kompliziert handhabbaren Lagen derselben auf Baustellen - sollen deshalb den vorteilhaften Einsatz der erfindungsgemäßen Vorrichtung 1 deutlich machen.

Somit gewinnt sowohl die Ausgestaltung eines Rahmens 2 als auch seine universelle Links-oder Rechtshandhabung in Verbindung mit dem Hauptzweck, nämlich das Schneiden besagter Werkstoffe 5 wie auch z.B. fliesenartige, eine besondere Bedeutung.

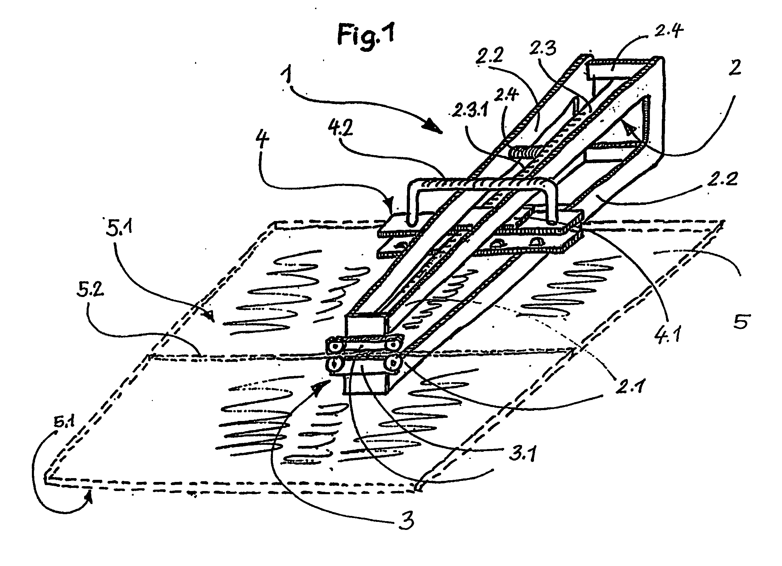

Entsprechend einer Gesamtdarstellung gemäß Fig. 1 besteht die erfindungsgemäße Vorrichtung 1 aus einem Rahmen 2 mit gabelartig gestalteten Armen 2.1. Der Abstand zwischen den freien Enden der Arme 2.1 ist unter Spannung veränderbar. An diesen freien Enden sind einen Schneidkopf 3 bildende Schneidwerkzeuge 3.1 angebracht, die mittels der Spannung der Arme 2.1 auf die zu schneidenden beiden Werkstoffebenen 5.1 des Werkstoffes 5 wirken.

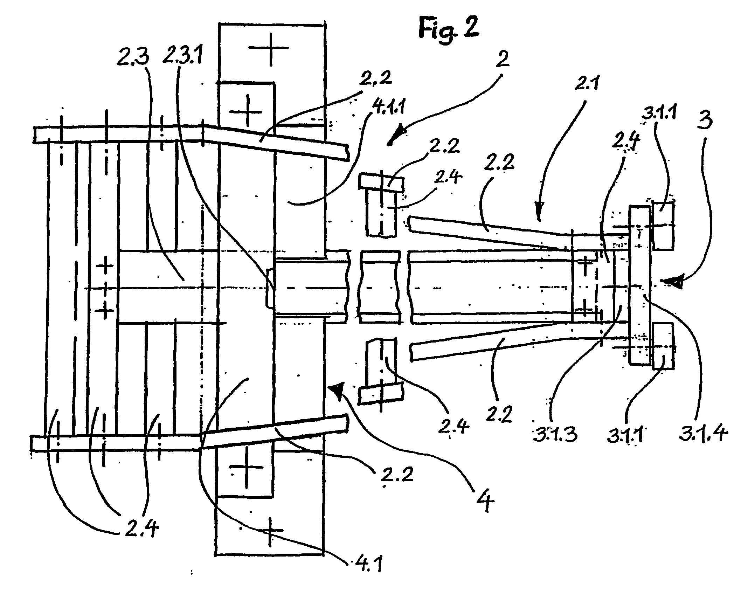

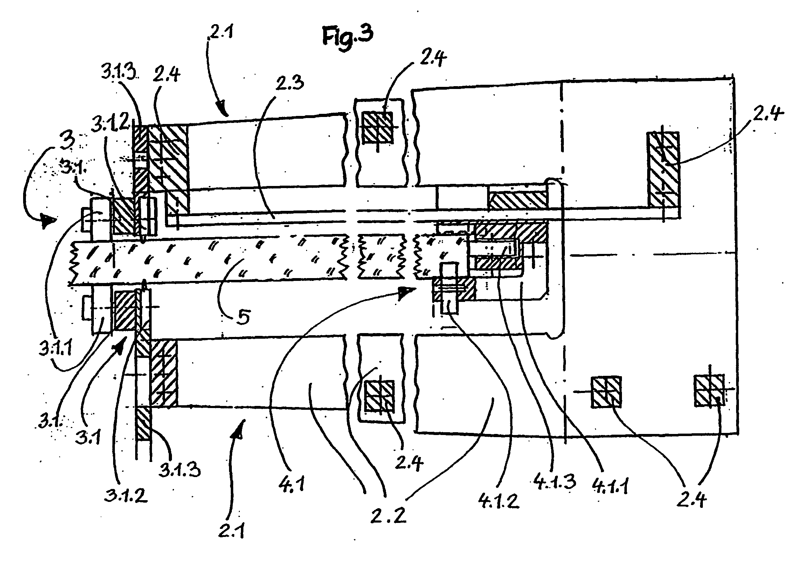

Den Schneidwerkzeugen 3.1 sind in ihren Positionen zu den Werkstoffebenen 5.1 einstellbare erste Führungsrollen 3.1.1, wie aus den Fig. 2 und 3 ersichtlich, zugeordnet.

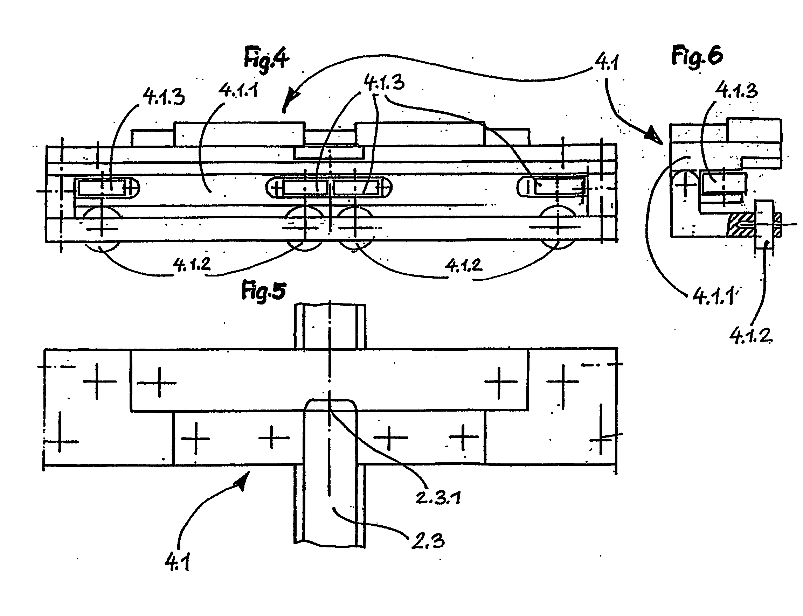

An einem Arm 2.1, in diesem Fall dem oberen gemäß Fig. 1, ist eine Führungsschiene 2.3, wie aus Fig. 2 ersichtlich, mit Maßskala 2.3.1 (Fig. 5) integriert, auf der eine in Längsrichtung des Armes 2.1 verstell- und feststellbare Traverse 4 zur maßgenauen Einstellung des Schneidabstandes von der gewünschten Bezugskante des Werkstoffes 5 angeordnet ist.

Diese Traverse 4 besitzt entsprechend Fig. 3 einen, die Bezugskante des zu schneidenden Werkstoffes 5 umfassenden, an dieser geführten und auf die Dicke des Werkstoffes 5 mit einer Vorspannung einstellbaren Führungskopf 4.1. Ein Handgriff 4.2, hier an dem Führungskopf 4.1 befestigt, dient zur Handhabung und unmittelbaren Einflußnahme der handhabenden Person auf die Führung der Vorrichtung.

Die neuartige Kombination dieser Hauptmerkmale der Erfindung und ihre funktionelle Verschmelzung im Hinblick auf die Komplexität des zu lösenden und zuvor dargestellten Problems zeigen die Vorteile zu den im Stand der Technik aufgeführten vorbekannten Vorrichtungen, insbesondere zum Schneiden von besagten Glasscheiben.

Um die Vorrichtung 1 im Sinne eines Leichtbaus ausführen zu können, bestehen die gabelartig gestalteten Arme 2.1 aus einem Paar U-förmig ausgebildeter, flächiger Elemente 2.2, die mittels Verbindungselemente 2.4 auf Abstand zueinander gehalten sind.

Somit entsteht ein äußerst leicht gebauter Rahmen 2, der einerseits stabil aber auch mit den gewünschten Eigenschaften einer Feder an den freien Enden seiner Arme 2.1 ausgebildet ist. Das ist für die Funktion der Ausübung des Druckes der Schneidwerkzeuge 3.1 auf die Werkstoffebenen 5.1 und die Einstellung bzw. Einstellbarkeit der Schneidwerkzeuge 3.1 auf die Dicke des Werkstoffes 5 vorteilhaft.

Andererseits optimiert dieser leicht gebaute Rahmen 2 die universelle Handhabung der Vorrichtung.

Aus der Fig. 3 ist ersichtlich, daß die Schneidwerkzeuge 3.1 an den freien Enden der Arme 2.1 des Rahmens 2 (Fig. 1 und 2) Schneidrollen 3.1.2 sein können.

Die in den Fig. 2 und 3 näher dargestellten ersten Führungsrollen 3.1.1 sichern einesteils eine optimale Position der Schneidwerkzeuge 3.1 hinsichtlich eines Führungsdruckes zu den Schneidebenen 5.1 (Fig. 1) und anderenteils einen geringst erforderlichen Widerstand zum Schneiden des Werkstoffes 5 (Fig. 3). Diese Wirkung wird hauptsächlich durch den mit seinen freien Enden der Arme 2.1 federnden Rahmen 2 gewährleistet.

Unterstützend für die Gesamtfunktion der Vorrichtung ist hierbei, daß die Schneidwerkzeuge 3.1 gemäß Fig. 3 baugleiche Teile bilden, welche zur Erhöhung der zuvor aufgezeigten Wirkung je aufweisen
- Trägerkörper 3.1.3, von denen mindestens einer in seiner vertikalen Position zur Schneidebene 5.1 am freien Ende eines Armes 2.1 verstellbar befestigt ist,
- am Trägerkörper 3.1.3 befestigte Läuferkörper 3.1.4 mit den ersten Führungsrollen 3.1.1 und den zwischen den ersten Führungsrollen 3.1.1 positionierten Schneidwerkzeugen 3.1, wobei der Abstand der Trägerkörper 3.1.3 zueinander mindestens unter Spannung der Arme 2.1 veränderbar ist, und
- einen Abstand zwischen den ersten Führungsrollen 3.1.1 und dem Schneidwerkzeug 3.1, senkrecht zur Werkstoffebene 5.1 gesehen, der den Führungsdruck und den geringst erforderlichen Widerstand zum Schneiden des Werkstoffes 5 sichert.

Im Wirkungszusammenhang auf den zu schneidenden Werkstoff 5 weist entsprechend Fig. 3, 5 und 6 der Führungskopf 4.1 zueinander verstellbare, auf beiden Werkstoffebenen 5.1 (Fig. 1) und zur Bezugskante des Werkstoffes 5 (Fig. 3) korrespondierende Führungselemente 4.1.1 mit zweiten 4.1.2 und dritten Führungsrollen 4.1.3 auf. Demzufolge erfüllt der Führungskopf 4.1 auch eine komplexe Funktion, wie Führung der Vorrichtung 1, Maßgenauigkeit des Zuschnitts mittels der Führungsschiene 2.3 mit Maßskala 2.3.1 (Fig. 5) und Handhabung der Vorrichtung 1 mittels des auf einem der Führungselemente 4.1.1 befestigten Handgriffes 4.2 (Fig. 3), der einen Arm 2.1 des Rahmens 2 umgreift (Fig. 1).

Zweckmäßigerweise erhalten die ersten 3.1.1, zweiten 4.1.2 und dritten Führungsrollen 4.1.3 mindestens auf ihren Laufflächen verschleißarme und/oder reibungsmindernde Beläge oder Beschichtungen.

Um variable Baugrößen von erfindungsgemäßen Vorrichtungen 1 technologisch günstig herstellen zu können, werden mindestens eine der beschriebenen Baugruppen oder Bauteile auswechselbar gestaltet. Dabei sollte der Rahmen 2 durch hier nicht ausgeführte Sektionen baugrößenmäßig veränderbar sein.

Es ist auch zweckmäßig, den Abstand zwischen den Führungselementen 4.1.1 des Führungskopfes 4.1, wie in Fig. 6 angedeutet, gegen den Druck mindestens eines nicht dargestellten Federelementes gelenkig verstellbar auszuführen.

Schließlich ist die Vorrichtung 1 in folgender Hinsicht ausbaufähig:
- Mindestens ein Führungselement 4.1.1 mit Handgriffen ist auf der Führungsschiene 2.3 als Bestandteil der Traverse 4 verschiebbar angeordnet (Fig. 3, 4 und 5);
- die Traverse 4 ist in nur einem Bezugspunkt arretierbar, und die Vorrichtung 1 kann kreisbogenförmige Schnitte auf dem Werkstoff ausführen, wobei mittels kulissenartiger Einsätze auch beliebige Kurven von Schneidlinien 5.2 realisierbar werden.

Insgesamt ist es besonders praktisch, wenn der Rahmen 2 einen Querschnitt aufweist, der sich von seinem geschlossenen hinteren Ende bis hin zu seinem vorderen Ende, welches die den Schneidkopf 3 aufnehmenden freien Enden der Arme 2.1 bildet, verjüngt.

Das hintere Ende des Rahmens 2 ist dazu ähnlich einem nicht dargestellten zweiten Handgriff gestaltet, wie in Fig. 1 angedeutet.

### Gewerbliche Anwendbarkeit

Mit der Erfindung wird eine Vorrichtung 1 für die gewerbliche und industrielle Praxis bereitgestellt, die sich in der internen Erprobung bewährt hat. Die eingangs beschriebenen Nachteile von bekannten Vorrichtungen konnten dabei weitgehend ausgeschaltet werden.

Bei der Anwendung der Vorrichtung 1 zum Schneiden von Verbundsicherheitsglas 5 kann die übliche Trennung der zwischen den Glasschichten angeordneten Kunststofffolie beibehalten werden.

Entsprechend dem konstruktiven Grundprinzip sind günstige ergonomische Ausführungen, auch universell für Linkshänder und Rechtshänder, gestaltbar und kostengünstige Herstellungstechnologien für die Vorrichtung 1 möglich.

Insgesamt gewährleistet die Vorrichtung 1 in ihrer Anwendung eine umfassende Realisierung aller in der Praxis vorkommenden Funktionen gemäß der eingangs dargestellten Problematik und Aufgabenstellung, ohne die bisherigen Nachteile hinnehmen zu müssen.

### Bezugszeichenliste

- 1 =: Vorrichtung
- 2 =: Rahmen
- 2.1 =: Arm
- 2.2 =: flächiges Element
- 2.3 =: Führungsschiene
- 2.3.1 =: Maßskala
- 2.4 =: Verbindungselement

- 3 =: Schneidkopf
- 3.1 =: Schneidwerkzeug
- 3.1.1 =: erste Führungsrolle
- 3.1.2 =: Schneidrolle
- 3.1.3 =: Trägerkörper
- 3.1.4 =: Läuferkörper

- 4 =: Traverse
- 4.1 =: Führungskopf
- 4.1.1 =: Führungselement
- 4.1.2 =: zweite Führungsrolle
- 4.1.3 =: dritte Führungsrolle
- 4.2 =: Handgriff

- 5 =: Werkstoff, Glas wie Verbundsicherheitsglas
- 5.1 =: Werkstoffebene
- 5.2 =: Schneidlinie

## Patentansprüche

1. Vorrichtung zum Schneiden von aus überwiegend mineralischen Stoffen bestehenden, ebenen, flächigen Werkstoffen, insbesondere Glas wie Verbundsicherheitsglas, mit einstellbarem Maß zu einer Bezugskante des Werkstoffes, umfassend einen Rahmen mit beidseitig, gegenüberliegend und gleichzeitig auf die Werkstoffebenen wirkenden Schneidwerkzeugen und Elementen sowohl für die Führung der Vorrichtung an der Bezugskante des Werkstoffes während des Schneidvorganges als auch deren universelle Handhabung gleich welcher örtlichen und/oder geometrischen Lage des Werkstoffes, **gekennzeichnet durch** die Kombination folgender Merkmale:
a) Der Rahmen (2) weist einen Schneidkopf (3) und gabelartig gestaltete Arme (2.1) auf, deren Abstand an den freien Enden zueinander unter Spannung veränderbar ist,
b) an den freien Enden der Arme (2.1) sind den Schneidkopf (3) bildende Schneidwerkzeuge (3.1) befestigt, die mittels der Spannung der Arme (2.1) auf die zu schneidenden Werkstoffebenen (5.1) wirken,
c) den Schneidwerkzeugen (3.1) sind in ihren Positionen zu den Werkstoffebenen (5.1) einstellbare erste Führungsrollen (3.1.1) zugeordnet,
d) an einem Arm (2.1) ist eine Führungsschiene (2.3) integriert, auf der eine in Längsrichtung des Armes (2.1) verstell- und feststellbare Traverse (4) zur Einstellung des Schneidabstandes von der Bezugskante angeordnet ist, und
e) die Traverse (4) besitzt einen, die Bezugskante des zu schneidenden Werkstoffes (5) umfassenden, an dieser geführten und auf die Dicke des Werkstoffes (5) mit einer Vorspannung einstellbaren Führungskopf (4.1) und einen Handgriff (4.2) zur Handhabung und unmittelbaren Einflußnahme der handhabenden Person auf die Führung der Vorrichtung (1).

2. Vorrichtung nach Anspruch 1, **dadurch gekennzeichnet, daß** die gabelartig gestalteten Arme (2.1) aus einem Paar U-förmig ausgebildeter, flächiger Elemente (2.2) bestehen, die mittels Verbindungselemente (2.4) auf Abstand zueinander gehalten und somit einen leichtgebauten Rahmen (2) darstellen.

3. Vorrichtung nach Anspruch 1 oder 2, **dadurch gekennzeichnet, daß** die Schneidwerkzeuge (3.1) an den freien Enden der Arme (2.1) Schneidrollen (3.1.2) sind.

4. Vorrichtung nach einem der Ansprüche 1 bis 3, **dadurch gekennzeichnet, daß** die ersten Führungsrollen (3.1.1) einesteils eine optimale Position der Schneidwerkzeuge (3.1) hinsichtlich eines Führungsdruckes zu den Schneidebenen halten und anderenteils einen geringst erforderlichen Widerstand zum Schneiden sichern.

5. Vorrichtung nach einem der Ansprüche 1 bis 4, **dadurch gekennzeichnet, daß** die an den freien Enden der Arme (2.1) befestigten Schneidwerkzeuge (3.1) baugleiche Teile bilden, welche je aufweisen
a) Trägerkörper (3.1.3), von denen mindestens einer in seiner vertikalen Position zur Schneidebene am freien Ende eines Armes (2.1) verstellbar ist,
b) am Trägerkörper (3.1.3) befestigte Läuferkörper (3.1.4) mit den ersten Führungsrollen (3.1.1) und den zwischen den ersten Führungsrollen (3.1.1) positionierten Schneidwerkzeugen (3.1), wobei der Abstand der Trägerkörper (3.1.3) zueinander mindestens unter Spannung der Arme (2.1) veränderbar ist, und
c) einen Abstand zwischen den ersten Führungsrollen (3.1.1) und dem Schneidwerkzeug (3.1) (senkrecht zur Werkstoffebene (5) gesehen), der den Führungsdruck und den geringst erforderlichen Widerstand zum Schneiden im Sinne eines Schneiddruckes sichert.

6. Vorrichtung nach einem der Ansprüche 1 bis 5, **dadurch gekennzeichnet, daß** die Führungsschiene (2.3) eine Maßskala (2.3.1) aufweist.

7. Vorrichtung nach einem der Ansprüche 1 bis 5, **dadurch gekennzeichnet, daß** der Führungskopf (4.1) zueinander verstellbare, auf beiden Schneidebenen und zur Bezugskante korrespondierende Führungselemente (4.1.1) mit zweiten und dritten Führungsrollen (4.1.2, 4.1.3) aufweist.

8. Vorrichtung nach einem der Ansprüche 1 bis 7, **dadurch gekennzeichnet, daß** der Handgriff (4.2) auf einem der Führungselemente (4.1.1) befestigt ist und einen der Arme (2.1) umgreift.

9. Vorrichtung nach Anspruch 1, 5 und 6, **dadurch gekennzeichnet, daß** die ersten, zweiten und dritten Führungsrollen (3.1.1, 4.1.2, 4.1.3) mindestens auf ihren Laufflächen verschleißarme und/oder reibungsmindernde Beläge oder Beschichtungen aufweisen.

10. Vorrichtung nach einem der Ansprüche 1 bis 10, **dadurch gekennzeichnet, daß**
a) mindestens eine der bezeichneten Baugruppen und/oder eines der Bauteile auswechselbar sind und
b) mindestens der Rahmen (2) durch nichtbezeichnete Sektionen baugrößenmäßig veränderbar ist.

11. Vorrichtung nach Anspruch 7, **dadurch gekennzeichnet, daß** der Abstand zwischen den Führungselementen (4.1.1) des Führungskopfes (4.1) gegen den Druck mindestens eines nichtbezeichneten Federelementes gelenkig verstellbar ist.

12. Vorrichtung nach Anspruch 7 und 11, **dadurch gekennzeichnet, daß** mindestens ein Führungselement (4.1.1) auf der Führungsschiene (2.3) als Bestandteil der Traverse (4.1) verschiebbar angeordnet ist und den Handgriff (4.2) aufweist.

13. Vorrichtung nach einem der Ansprüche 1 bis 12, **dadurch gekennzeichnet, daß** die auf der Führungsschiene (2.3) verstell- und feststellbar angeordnete Traverse (4) zur Einstellung des Schneidabstandes von der Bezugskante des zu schneidenden Werkstoffes (5)
a) in einem Bezugspunkt durch nicht dargestellte Mittel arretierbar ist und
b) durch entsprechende Handhabung und Führung der Vorrichtung (1) die Schneidwerkzeuge (3.1) kreisbogenförmige Schnitte auf dem Werkstoff (5) ausführen.

14. Vorrichtung nach einem der Ansprüche 1 bis 13, **dadurch gekennzeichnet, daß**
a) zwischen der Traverse (4) und der Bezugskante des Werkstoffes (5) kulissenartige, nicht bezeichnete Einsätze mit beliebiger Kurvenform vorgesehen sind und
b) durch entsprechende Handhabung und Führung der Vorrichtung (1) die Schneidwerkzeuge (3.1) gemäß der Kulisse kurvenförmige Schnitte auf dem Werkstoff (5) ausführen.

15. Vorrichtung nach einem der Ansprüche 1 bis 14, **dadurch gekennzeichnet, daß** der Rahmen (2), ausgehend von seinem geschlossenen Ende bis hin zu seinem vorderen Ende, welches die den Schneidkopf (3) aufnehmenden freien Enden der Arme (2.1) bildet, einen sich verjüngenden Querschnitt aufweist, wobei das hintere Ende des Rahmens (2) als nicht bezeichneter zweiter Handgriff für eine Links-oder Rechtshandhabung gestaltet ist.

## Claims

1. Apparatus for cutting sheet materials consisting of predominantly mineral substances, such as laminated safety glass, to dimensions adjustable relative to a reference edge of the material, comprising a frame mounting oppositely disposed cutting tools acting simultaneously on both major planes of the material, as well as elements both for guiding said apparatus along the reference edge of the material while cutting the same and for the universal handling of said apparatus regardless of the local and/or geometric position of the material, **characterized by** the combination of the following features:
a) Frame (2) has a cutting head (3) and arms (2.1) in a bifurcated configuration of which the mutual distance at the free ends is variable under tension;
b) The free ends of arms (2.1) have attached thereto cutting tools (3.1) forming the cutting head (3) and acting onto the material planes (5.1) to be cut by virtue of the bias exerted by arms (2.1);
c) Cutting tools (3.1) have associated therewith first guide rolls (3.1.1) of which the positions are variable relative to material planes (5.1);
d) one of said arms (2.1) has integrated therewith a guide rail (2.3) on which is mounted a transverse element (4) adjustable and fixable in the longitudinal direction for setting the cutting distance from the reference edge; and
e) transverse element (4) has thereon a guide head (4.1) which straddles the reference edge of the material (5) to be cut, is guided by and along said reference edge and is biased against material (5) to adjust to the thickness thereof, said transverse element (4) also including a handle (4.2) for the manipulation and the direct control of apparatus (1) by the user handling it.

2. Apparatus as in claim 1, **characterized in that** bifurcated arms (2.1) comprise a pair of U-shaped planar elements (2.2) held at a mutual distance by connecting elements (2.4) to form a lightweight frame (2).

3. Apparatus as in claim 1 or 2, **characterized in that** cutting tools (3.1) at the free ends of arms (2.1) comprise cutting wheels (3.1.2).

4. Apparatus as in any one of claims 1 to 3, **characterized in that** first guide rolls (3.1.1) maintain cutting tools (3.1) in positions suited, on the one hand, to provide an optimum guiding pressure relative to the cutting planes and, on the other hand, to ensure a minimum required resistance for cutting.

5. Apparatus as in any one of claims 1 to 4, **characterized in that** cutting tools (3.1) secured at the free ends of arms (2.1) form constructionally similar parts each comprising:
a) Supporting bodies (3.1.3) at least one of which is adjustable at the free end of an arm (2.1) in vertical position relative to the cutting plane;
b) Travelling bodies (3.1.4) secured to supporting body (3.1.3) and mounting first guide rolls (3.1.1) and cutting tools (3.1) positioned between said first guide rolls (3.1.1), with the mutual distance of supporting bodies (3.1.3) being variable at least by the resilient bias of arms (2.1),
c) A distance between first guide rolls (3.1.1) and cutting tool (3.1) (seen in a direction perpendicular to the plane of material (5)) which ensures a positive guiding pressure and the least required resistance for obtaining a proper cutting pressure.

6. Apparatus as in any one of claims 1 to 5, **characterized** that guide rail (2.3) has a scale or graduation (2.3.1) thereon.

7. Apparatus as in any one of claims 1 to 5, **characterized in that** guide head (4.1) has guide elements (4.1.1) with second and third guide rolls (4.1.2, 4.1.3), said guide elements corresponding to the reference edge and being adjustable towards each other and disposed on both cutting planes.

8. Apparatus as in any one of claims 1 to 7, **characterized by** handle (4.2) being provided on one of guide elements (4.1.1) to embrace one of arms (2.1).

9. Apparatus as in claims 1, 5 and 6, **characterized by** said first, second and third guide rolls (3.11, 4.1.2, 4.1.3) having wear-resistant and/or friction-reducing coatings at least on their races.

10. Apparatus as in any one of claims 1 to 10, **characterized by**
a) at least one of the constructional groupings and/or one of the component parts referred to hereinabove being designed to be replaceable and
b) at least frame (2) being variable in constructional size by comprising sections not designated and shown.

11. Apparatus as in claim 7, **characterized by** the distance between guide elements (4.1.1) of guide head (4.1) being variable articulatedly against a force exerted by at least one spring element (not shown).

12. Apparatus as in claims 7 and 11, **characterized by** at least one guide element (4.1.1) being provided for movement on guide rail (2.3) as a component part of transverse element (4.1), said guide element also having the aforesaid handle (4.2).

13. Apparatus as in any one of claims 1 to 12, **characterized in that**, for setting the cutting distance from the reference edge of material (5) to be cut, transverse element 4, which is mounted on guide rail (2.3) in a manner to be adjustable and fixed in place,
a) is adapted to be fixed in position at a reference point by means not illustrated,
b) with cutting tools (3.1) adapted to perform arcuate cuts on material (5) by correspondingly manipulating and moving apparatus (1),

14. Apparatus as in any one of claims 1 to 13, **characterized by**
a) transverse element (4) and the reference edge of material ( ) having therebetween guide-block-like inserts (not illustrated herein) of any curved shape and
b) apparatus (1) being manipulated and guided to cause cutting tools (3.1) to perform curved cuts on material (3) as guided by said blocks.

15. Apparatus as in any one of claims 1 to 14, **characterized in that** frame (2) has a cross-sectional shape tapering from its closed end to its front end forming the free ends of arms (2.1) accepting cutting head (3), with the rear end of frame (2) being configured to form a second handle (not illustrated) for left- or right-handed manipulation.

## Revendications

1. Dispositif pour couper des matériaux plats et plans principalement composés de matières minérales, notamment du verre tel que du verre de sécurité feuilleté, avec des dimensions variables par rapport à une arête de référence du matériau, comprenant un cadre équipé de deux outils de coupe agissant simultanément et en miroir sur chacune des faces du matériau, et des éléments servant à la fois à guider le dispositif le long de l'arête de référence du matériau pendant la coupe et à manoeuvrer ledit dispositif de manière universelle quelles que soient la position et/ou la géométrie du matériau, **caractérisé par** la combinaison des caractéristiques suivantes :
a) le cadre (2) présente une tête de coupe (3) et des bras conçus à la manière d'une fourche (2.1) dont l'écartement aux extrémités libres sous tension est variable,
b) des outils de coupe (3.1) formant la tête de coupe (3) sont fixés aux extrémités libres des bras (2.1), qui agissent sur les faces (5.1) du matériau à couper au moyen de la tension des bras (2.1),
c) des premiers galets de guidage (3.1.1), dont la position par rapport aux faces (5.1) du matériau est réglable, sont associés aux outils de coupe (3.1),
d) un rail de guidage (2.3) est intégré dans un bras (2.1), sur lequel est disposée une traverse (4) pouvant être déplacée dans la direction longitudinale du bras (2.1) et immobilisée, afin de régler la distance entre l'endroit de la coupe et l'arête de référence, et
e) la traverse (4) possède une tête de guidage (4.1) entourant l'arête de référence du matériau à couper (5), qui est guidée le long de cette dernière et qui peut être réglée avec une précontrainte suivant l'épaisseur du matériau à couper (5), et une poignée (4.2) pour manier le dispositif (1) et pour permettre à l'utilisateur d'influer directement sur le guidage dudit dispositif.

2. Dispositif selon la revendication 1, **caractérisé en ce que** les bras (2.1) réalisés à la manière d'une fourche sont composés d'une paire d'éléments plats (2.2) formant chacun un U, qui sont maintenus en écartement par des éléments de liaison (2.4) et constituent ainsi un cadre (2) léger.

3. Dispositif selon la revendication 1 ou 2, **caractérisé en ce que** les outils de coupe (3.1) situés aux extrémités libres des bras (2.1) sont des lames circulaires (3.1.2).

4. Dispositif selon l'une des revendications 1 à 3, **caractérisé en ce que** les premiers galets de guidage (3.1.1), d'une part, maintiennent les outils de coupe (3.1) dans une position optimale par rapport aux plans de coupe en ce qui concerne une pression de guidage et, d'autre part, opposent la plus faible résistance nécessaire pour la coupe.

5. Dispositif selon l'une des revendications 1 à 4, **caractérisé en ce que** les outils de coupe (3.1) fixés aux extrémités libres des bras (2.1) forment des pièces identiques qui présentent chacune
a) des supports (3.1.3) dont au moins un est réglable verticalement par rapport au plan de coupe à l'extrémité libre d'un bras (2.1),
b) des corps de roulement (3.1.4) fixés au support (3.1.3), associés aux premiers galets de guidage (3.1.1) et aux outils de coupe (3.1) positionnés entre les premiers galets de guidage (3.1.1), l'écart entre les supports (3.1.3) pouvant être modifié au moins en mettant les bras (2.1) sous tension, et
c) un écart entre le premiers galets de guidage (3.1.1) et l'outil de coupe (3.1) (perpendiculairement au plan du matériau (5)), qui assure la pression de guidage et la plus faible résistance nécessaire pour la coupe au sens d'une pression de coupe.

6. Dispositif selon l'une des revendications 1 à 5, **caractérisé en ce que** le rail de guidage (2.3) présente une règle graduée ou graduation (2.3.1).

7. Dispositif selon l'une des revendications 1 à 5, **caractérisé en ce que** la tête de guidage (4.1) présente des éléments de guidage (4.1.1) réglables l'un par rapport à l'autre, disposés sur chaque plan de coupe et correspondant à l'arête de référence, qui sont dotés de deuxièmes et troisièmes galets de guidage (4.1.2, 4.1.3).

8. Dispositif selon l'une des revendications 1 à 7, **caractérisé en ce que** la poignée (4.2) est fixée sur l'un des éléments de guidage (4.1.1) et entoure l'un des bras (2.1).

9. Dispositif selon les revendications 1, 5 et 6, **caractérisé en ce que** les premiers, deuxièmes et troisièmes galets de guidage (3.1.1, 4.1.2, 4.1.3) présentent au moins sur leurs surfaces de roulement des garnitures ou des revêtements à faible usure et/ou limitant les frottements.

10. Dispositif selon l'une des revendications 1 à 10, **caractérisé en ce que**
a) au moins l'une des unités citées et/ou l'une des pièces sont remplaçables et
b) au moins la dimension du cadre (2) peut être modifiée par des sections non désignées.

11. Dispositif selon la revendication 7, **caractérisé en ce que** l'écart entre les éléments de guidage (4.1.1) de la tête de guidage (4.1) est réglable de façon articulée contre la pression d'au moins un élément de ressort non désigné.

12. Dispositif selon les revendications 7 et 11, **caractérisé en ce qu'**au moins un élément de guidage (4.1.1) est disposé de façon coulissante sur le rail de guidage (2.3), en tant que partie de la traverse (4.1), et présente la poignée (4.2).

13. Dispositif selon l'une des revendications 1 à 12, **caractérisé en ce que**, pour régler la distance par rapport à l'arête de référence du matériau à couper (5), la traverse (4) disposée sur le rail de guidage (2.3) de manière à pouvoir être déplacée et immobilisée
a) peut être arrêtée en un point de référence par des moyens non représentés et
b) en maniant et en guidant le dispositif (1) en conséquence, les outils de coupe (3.1) effectuent des coupes en arc de cercle dans le matériau (5).

14. Dispositif selon l'une des revendications 1 à 13, **caractérisé en ce que**
a) des inserts non désignés de forme courbe quelconque et semblables à une coulisse sont prévus entre la traverse (4) et l'arête de référence du matériau (5) et
b) en maniant et en guidant le dispositif (1) en conséquence, les outils de coupe (3.1) effectuent des coupes curvilignes dans le matériau (5) en suivant la coulisse.

15. Dispositif selon l'une des revendications 1 à 14, **caractérisé en ce que** le cadre (2) présente, de son extrémité fermée jusqu'à son extrémité avant que forment les bras (2.1) portant à leurs extrémités libres la tête de coupe (3), une section transversale allant en se rétrécissant, l'extrémité arrière du cadre (2) étant conçue telle une seconde poignée non désignée, pour permettre de manier le dispositif avec la main gauche ou la main droite.
